# EUROPEAN PATENT APPLICATION

(11) **EP 4 333 268 A1**
(43) Date of publication of application: **06.03.2024**
(21) Application number: 23185514.9
(22) Date of filing: 14.07.2023
(51) Int. Cl.: H02K 5/20, H02K 9/19, H02K 9/22

(54) **COOLING DEVICE AND MOTOR HAVING THE SAME**

(30) Priority: 30.08.2022 CN 202211046057
(71) Applicant: Harbin Institute of Technology, Nangang District Harbin City, Heilongjiang Province, 150006 (CN); Delta Electronics (Shanghai) Co., Ltd., Shanghai 201209 (CN)
(72) Inventor: WU, Shaopeng, Harbin City, 150006 (CN); ZHANG, Xinmiao, Harbin City, 150006 (CN); YU, Jiaqiang, Harbin City, 150006 (CN); ZHOU, Jinyang, Harbin City, 150006 (CN)
(74) Representative: SSM Sandmair

(57) **Abstract**

The disclosure provides a cooling device (CD) and a motor (100) having the same. The cooling device (CD) includes: a first cooling channel (10), a second cooling channel (20) and a third cooling channel (30); wherein the first cooling channel (10), the second cooling channel (20) and the third cooling channel (30) are arranged along an axial direction (D1) and connected in sequence, and the second cooling channel (20) further extends along a radial direction (D2).. The disclosure can satisfy requirements of heat dissipation for an end portion of the motor winding (53) (i.e., along the axial direction (D1)), radial and circumferential directions of the motor (100) and power devices on the motor driver (54), and can improve heat dissipation efficiency of an integrated motor driving system of the endwise integrated structure in a limited space, while decreasing an overall weight of the system and reducing cost.

## Description

### BACKGROUND

### 1. Field

The disclosure relates to the technical field of heat dissipation, and particularly to a cooling device and a motor having the same.

### 2. Related Art

Heat dissipation structure is an essential component of the motor, and is of great significant to improve working efficiency of the motor and increase power density of the system. Currently, heat dissipation method of the motor is mainly to design cooling water channel in the housing, by utilizing the fluidity of cooling water to dissipate heat from the motor, in order to avoid temperature rise too high to affect the performance of the motor, thereby improving working efficiency of the motor. The traditional structure of the cooling water channel mainly includes two types: spiral cooling water channel and Z-shaped cooling water channel. However, the inventor realized that the structure of the spiral cooling water channel and the Z-shaped cooling water channel both only achieve heat dissipation of the motor body (i.e., heat dissipation in radial and circumferential directions), and do not solve the problem of heat dissipation of an end portion of the motor (i.e., heat dissipation in an axial direction).

### SUMMARY

An object of the disclosure is to provide a cooling device and a motor having the same, which can effectively solve one or more deficiencies in the prior art.

In order to achieve the object, the disclosure provides a cooling device, including: a first cooling channel, a second cooling channel and a third cooling channel; wherein the first cooling channel, the second cooling channel and the third cooling channel are arranged along an axial direction, wherein the second cooling channel further extends along a radial direction, and the radial direction is perpendicular to the axial direction.

In order to achieve the object, the disclosure further provides a motor, comprising a housing, a motor shaft, a rotor, a stator, a motor winding, a motor driver and the cooling device as described above.

The present disclosure can provide heat dissipation capability for an end portion of the motor (e.g., connection of the motor driver and the end portion of the motor, an end portion of the motor winding, etc.) using the second cooling channel of the cooling device.

The additional aspects and advantages of the disclosure are partially explained in the below description, and partially becoming apparent from the description, or can be obtained through the practice of the disclosure.

### BRIEF DESCRIPTION OF THE DRAWINGS

Exemplary embodiments are described in details with reference to the accompanying drawings, and the above and other features and advantages of the disclosure become more apparent.
FIG. 1 is a perspective structural diagram of an endwise integrated structure (EIS) used by a motor according to one embodiment of the disclosure.
FIG. 2A is a perspective diagram of one embodiment of the EIS shown in FIG. 1.
FIG. 2B is a perspective diagram of one embodiment of the EIS shown in FIG. 1 as viewing from one end.
FIG. 2C is a perspective diagram of one embodiment of the EIS shown in FIG. 1 as viewing from one side.
FIG. 3A is a schematic diagram of one embodiment of an integrated cooling structure in the EIS shown in FIG. 2A.
FIG. 3B is a structural diagram of one embodiment of a first cooling channel in the integrated cooling structure shown in FIG. 3A.
FIG. 3C is a structural diagram of one embodiment of a second cooling channel in the integrated cooling structure shown in FIG. 3A.
FIG. 3D is a schematic diagram of one embodiment of flowing directions of a cooling liquid flowing in adjacent two channels in multiple channels of the second cooling channel shown in FIG. 3C.
FIG. 3E is a structural diagram of one embodiment of a third cooling channel in the integrated cooling structure shown in FIG. 3A.
FIGS. 3F, 3G and 3H are schematic diagrams of some embodiments of several different arrangements of the second cooling channel in the integrated cooling structure shown in FIG. 3A, respectively.
FIG. 4A is a schematic diagram of one embodiment of a longitudinal section after the motor of the disclosure is assembled to the EIS shown in FIG. 1.
FIG. 4B is a structural diagram where a second housing portion of one embodiment of the EIS in FIG. 4A further extends inwardly to form an end cover along a radial direction.
FIG. 5A is a structural diagram where a power switching device of a motor driver in FIG. 4A is mounted on an inner wall of a first cavity and thermally coupled to the first cooling channel.
FIG. 5B is a structural diagram where the power switching device of the motor driver in FIG. 4A is mounted on a first end cover sidewall of the end cover adjacent to the first cavity and thermally coupled to the second cooling channel.

### DETAILED EMBODIMENTS OF THE DISCLOSURE

Now the exemplary embodiments are comprehensively described with reference to the accompanying drawings. However, the exemplary embodiments can be implemented in various forms, and shall not be understood to be limited to the embodiments set forth herein. On the contrary, these embodiments are provided so that this disclosure will be thorough and complete, and the conception of exemplary implementations will be fully conveyed to those skilled in the art. In the drawings, the same reference numerals denote the same or similar structure, thus their detailed description will be omitted.

When introducing the described and/or illustrated elements or components or the like, the words "one", "a", "the" and "at least one" represent one or more elements or components, or the like. The terms "comprise", "include" and "have" represent an open and including meaning, and refer to another elements or components, or the like, in addition to the listed elements or components, or the like. Moreover, when two components are "connected" or "coupled", both may be directly connected or coupled, and may also have an intervening component. The embodiments may use relative words, such as, "above" or "under" to describe a relative relation of one component relative to another component. It can be understood that if the labeled device is inverted up side down, the "above" component becomes an "under" component. In addition, the terms "first", "second" and the like in the claims are only used as signs, not limiting to the number of the object.

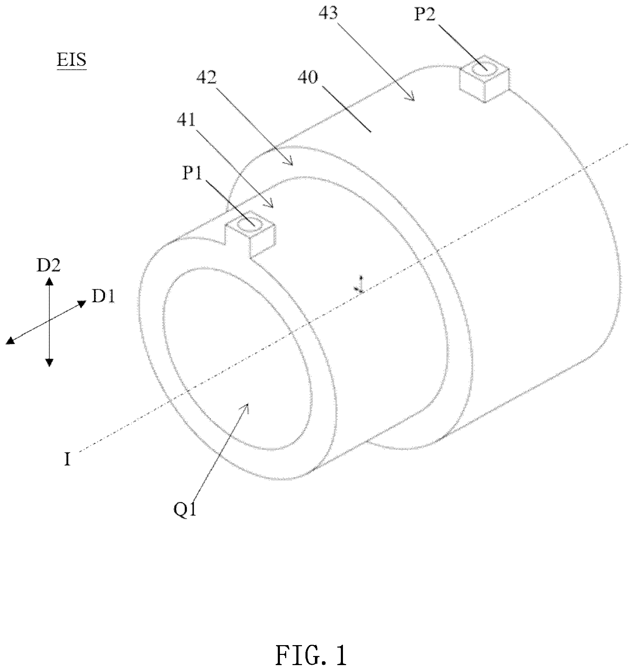

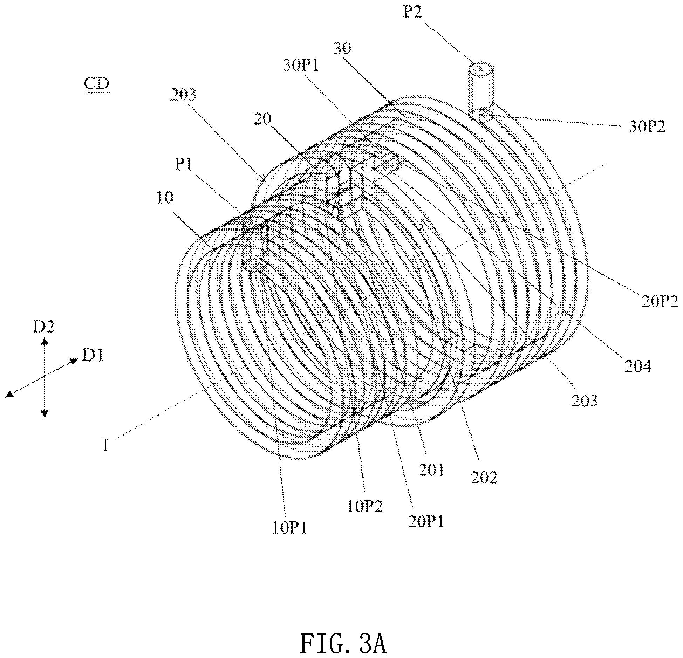

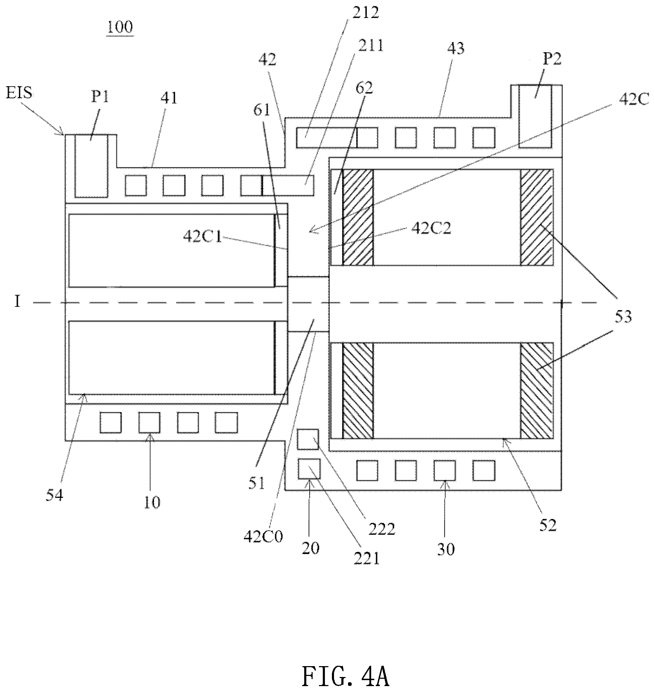

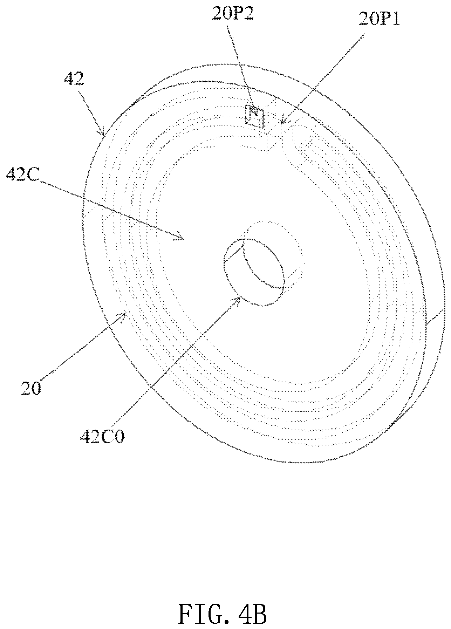

As shown in FIGS. 1 to 4B, taking a motor 100 for example, they show one or more embodiments of an endwise integrated structure (EIS) used by the motor 100 according to the disclosure (as shown in FIGS. 1 to 2C), and show a structure after the motor 100 of the disclosure is assembled to one or more embodiments of the endwise integrated structure (as shown in FIG. 4A). As shown in FIG. 4A, one or more embodiments of the motor 100 may include a motor shaft 51, a rotor (not shown in the figure), a stator 52, a motor winding 53 and a motor driver 54, and these structures may be assembled in the endwise integrated structure EIS. In the disclosure, the motor 100 further includes a cooling device CD, as shown in FIG. 3A, which may be integrated in the endwise integrated structure EIS shown in FIGS. 1 to 2C, and may also provide heat dissipation for the motor 100 at multiple positions in different directions (e.g., axial, radial and circumferential directions).

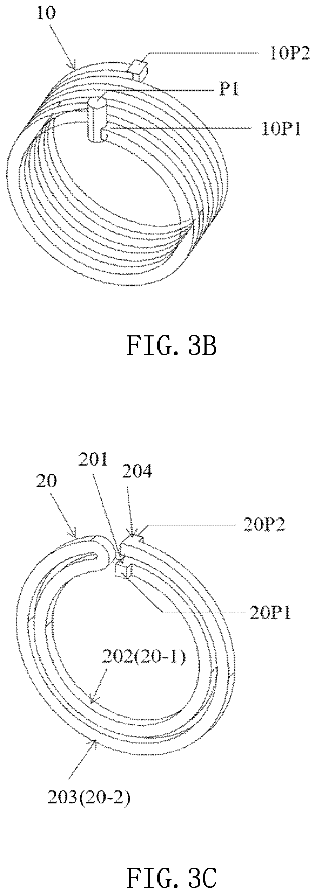

As shown in FIG. 3A, referring to FIGS. 3B to 3E, in the disclosure, the cooling device CD may include a first cooling channel 10, a second cooling channel 20 and a third cooling channel 30 arranged along an axial direction D1 and in communication sequentially, and the first cooling channel 10, the second cooling channel 20 and the third cooling channel 30 are in communication to be a whole to form an integrated cooling structure. For example, a tail end outlet 10P2 of the first cooling channel 10 is in communication with a head end inlet 20P1 of the second cooling channel 20, and a tail end outlet 20P2 of the second cooling channel 20 is in communication with a head end inlet 30P1 of the third cooling channel 30. In the disclosure, the second cooling channel 20 extends to arrange along a radial direction D2, thereby forming a radial cooling structure to provide a heat dissipation path along the axial direction D1 for cooled devices. In addition, the radial direction D2 referred in the disclosure includes all directions perpendicular to the axial D1.

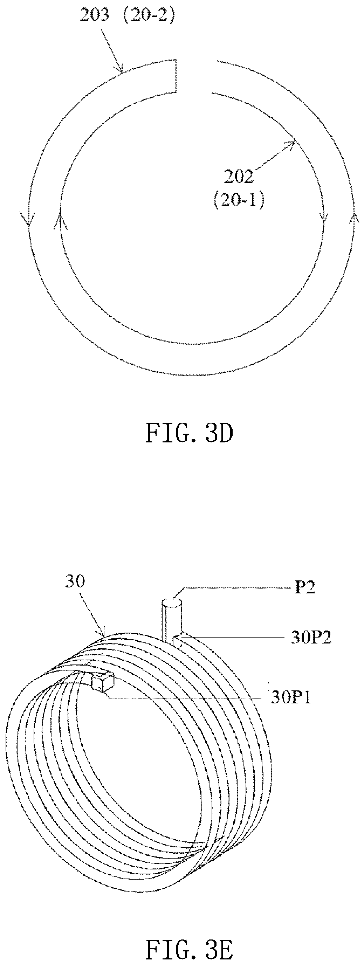

Referring to FIGS. 3A, 3B and 3E, in some embodiments, the first cooling channel 10 and the third cooling channel 30 are spirally arranged in multiple layers along the axial direction D1. In some embodiments, a first radial dimension of the first cooling channel 10 along the radial direction D2 may be less than a third radial dimension of the third cooling channel 30 along the radial direction D2. In one or more embodiments, the second cooling channel 20 can be connected to the first cooling channel 10 and the third cooling channel 30 to be an unibody structure. In addition, the second cooling channel 20 can also achieve smooth transition from the first cooling channel 10 to an outer diameter of the third cooling channel 30 by adding the number of channels. Referring to FIGS. 3A, 3C and 3D, in some embodiments, the second cooling channel 20 is spirally arranged in multiple layers along the axial direction D1, and the second cooling channel 20 has multilayered channels, and multi-stacked channels of the multilayered channels are arranged in stack along the radial direction D2. For example, in the embodiment of FIG. 3A, the second cooling channel 20 includes multilayered channels 201 to 204 in communication sequentially. The channel 201 is formed by extending a predetermined length towards the first cooling channel 10 along the axial direction D1 and the channel 201 includes a head end inlet 20P1 of the second cooling channel 20, the channel 202 is formed in a spiral arrangement at an inner side position of the radial direction D2, the channel 203 is formed in a spiral arrangement at an outer side position of the radial direction D2 after a tail end of the channel 202 extends outwardly a predetermined radial height along the radial direction D2, and the channel 204 is formed after a tail end of the channel 203 extends a predetermined length towards the third cooling channel 30 along the axial direction D1, and includes a tail end outlet 20P2 of the second cooling channel 20. Therefore, the channel 202 and channel 203 of the second cooling channel 20 are arranged in stack along the radial direction D2. And the multi-stacked channels include the channel 202 and channel 203. The channel 201 and channel 204 shown in FIG.3C are connected with the head end inlet 20P1 of the second cooling channel 20 and the tail end outlet 20P2 of the second cooling channel 20, respectively. In some embodiments, the channel 201 can spirally arranged in multiple layers along the axial direction D1 like the first cooling channel 10, and the channel 204 can spirally arranged in multiple layers along the axial direction D1 like the third cooling channel 30. In some embodiments, when a cooling liquid flows from the first cooling channel 10 to the third cooling channel 30, in the multi-stacked channels of the second cooling channel 20, the cooling liquid flowing in adjacent two channels has opposite flowing directions. For example, as shown in FIG. 3D, the cooling liquid flows clockwise in an inner side channel 20-1 (such as, corresponding to the channel 202 in FIG. 3A) inside, and the cooling liquid flows anticlockwise in an outer side channel 20-2 (such as, corresponding to the channel 203 in FIG. 3A) outside. As for the second cooling channel 20 having three or more multi-stacked channels, the flowing directions of the cooling liquid in any adjacent two channels can be opposite. In some other embodiments, in the multi-stacked channels (for example, the inner side channel 20-1 and the outer side channel 20-2) of the second cooling channel 20, the flowing directions of the cooling liquid flowing in any adjacent two channels may also be the same.

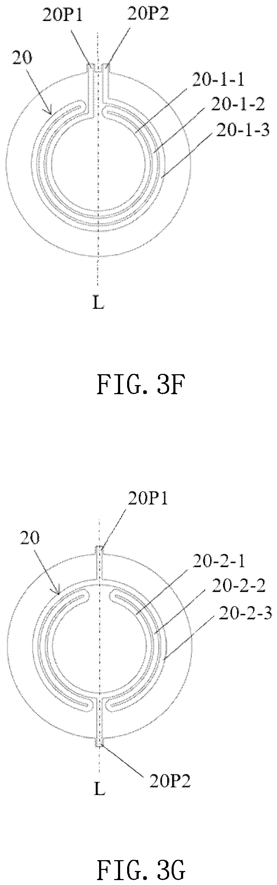

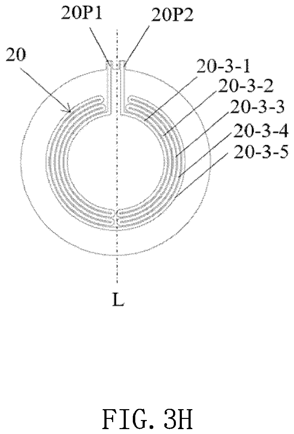

In some embodiments of the disclosure, the multi-stacked channels of the second cooling channel 20 may be arranged symmetrically along the radial direction D2. For example, taking the embodiments of FIGS. 3A to 3E for example, the second cooling channel 20 forms two channels, i.e., including the inner side channel 20-1 inside and the outer side channel 20-2 outside, and the two channels are substantially circular. In some other embodiments, the multi-stacked channels (for example, the inner side channel 20-1 and the outer side channel 20-2) of the second cooling channel 20 may also be arranged asymmetrically along the radial direction D2. For example, the channel 203 forming the outer side channel 20-2 in the embodiments of FIGS. 3A to 3E is changed from a circle to a semi-circle, and for example, a right half of the outer side channel 20-2 in FIG. 3C is removed, i.e., the outer side channel 20-2 only includes the left half channel 203, such that the formed multi-stacked channels (i.e., the inner side channel 20-1 and the outer side channel 20-2) of the second cooling channel 20 is arranged asymmetrically along the radial direction D2. Of course, it can be understood that arrangement of the second cooling channel 20 may be designed according to actual needs. For example, as shown in FIG. 3F, the head end inlet 20P1 and the tail end outlet 20P2 of the second cooling channel 20 may be on the same side (for example, both are located on an upper side), and three channels 20-1-1, 20-1-2 and 20-1-3 are sequentially formed from an inner side to an outer side, and arranged asymmetrically along the radial direction (for example, the channels along left and right sides of a radial axis L in the figure are asymmetrical). Alternatively, as shown in FIG. 3G, the head end inlet 20P1 and the tail end outlet 20P2 of the second cooling channel 20 may be on different sides (for example, one is located on an upper side, and the other is located on a lower side), and three channels 20-2-1, 20-2-2 and 20-2-3 are sequentially formed from an inner side to an outer side, and arranged symmetrically along the radial direction (for example, the channels along left and right sides of the radial axis L in the figure are symmetrical). Alternatively, as shown in FIG. 3H, the head end inlet 20P1 and the tail end outlet 20P2 of the second cooling channel 20 may be on the same side (for example, both are located on an upper side), and five channels 20-3-1, 20-3-2, 20-3-3, 20-3-4 and 20-3-5 are sequentially formed from an inner side to an outer side, and arranged symmetrically along the radial direction (for example, the channels along left and right sides of the radial axis L in the figure are symmetrical). Although FIGS. 3F to 3G show several different arrangements of the second cooling channel 20 in the disclosure, it can be understood that structure of the inlet and outlet of the second cooling channel (e.g., on the same side or different sides), the number of channels of the second cooling channel, and the channel structure along left and right sides of the radial axis L (e.g., a symmetrical or asymmetric structure) may have different combinations. Moreover, different combination forms cooperating with different flow velocities of the cooling liquid may lead to differences in aspect of heat dissipation capability and pressure loss. For example, the faster the flow velocity of the water channel is, the larger the pressure loss will be, and the more the number of water channels is, the larger the pressure loss will be. In the case of the same number of channels, the symmetrical structure has best heat dissipation capability, but the pressure loss is large, and the structure of the inlet and outlet on different sides has the minimum pressure loss, but heat dissipation effect is worst. Therefore, the disclosure can achieve different cooling effects when cooperating with different numbers of channels and different channel structures according to needs.

As shown in FIG. 3A, in some embodiments of the disclosure, the cooling device CD may further include a cooling liquid inlet P1 and a cooling liquid outlet P2. The cooling liquid inlet P1 may be in communication with a head end inlet 10P1 of the first cooling channel 10 (referring to FIG. 3B), and the cooling liquid outlet P2 may be in communication with a tail end outlet 30P2 of the third cooling channel 30 (referring to FIG. 3E). In other embodiments of the disclosure, directions for in and out of the cooling liquid in the cooling liquid inlet P1 and the cooling liquid outlet P2 may be exchanged. That is, the cooling liquid may flow in from the cooling liquid outlet P2, and flow out from the cooling liquid inlet P1.

In some embodiments, referring to FIG. 3A, the disclosure may only arrange a pair of inlet and outlet, i.e., one cooling liquid inlet P1 and one cooling liquid outlet P2 on the same side of an axial center line I, such as, an upper side in FIG. 3A,.

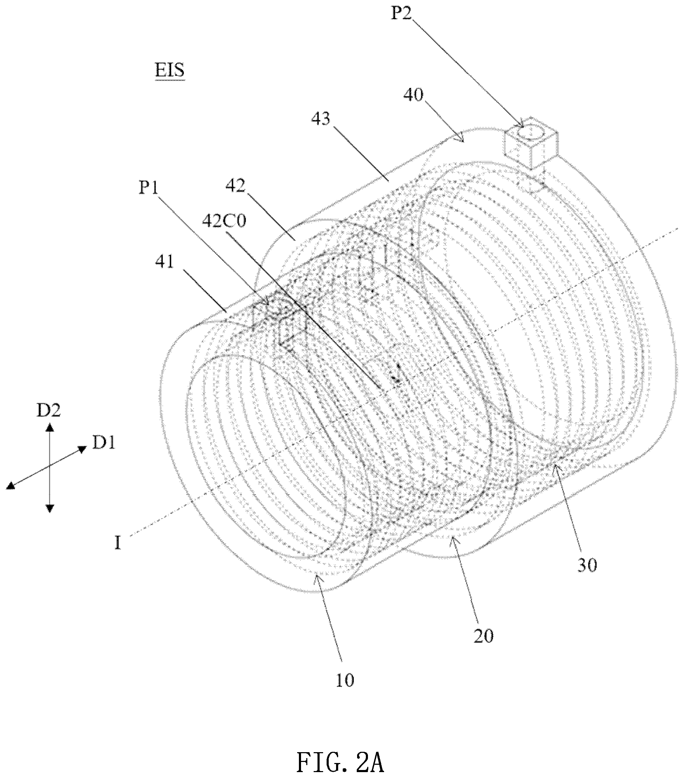

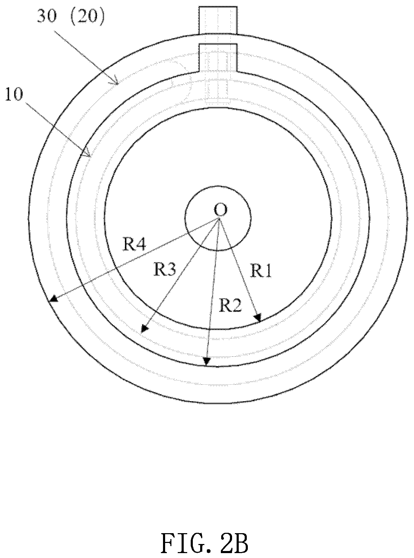

In some embodiments of the disclosure, the cooling device of the disclosure, for example, is integrated in a housing 40, thereby integrating to be an endwise integrated structure EIS shown in FIGS. 1 to 2C. The housing 40, for example, may be a metal housing, or may be made of other conductive materials. As shown in FIGS. 1 to 2C, the housing may include a first housing portion 41, a second housing portion 42 and a third housing portion 43 integrated with the first cooling channel 10, the second cooling channel 20 and the third cooling channel 30 respectively. The first housing portion 41 forms a first cavity Q1 correspondingly, and the third housing portion 43 forms a second cavity Q2 correspondingly. In some embodiments, the first cavity Q1, for example, is cylindrical, and the first housing portion 41, for example, has an inner diameter dimension R1 and an outer diameter dimension R2 (as shown in FIGS. 2B to 2C). The second cavity Q2, for example, is also cylindrical, and the third housing portion 43, for example, has an inner diameter dimension R3 and an outer diameter dimension R4 (as shown in FIGS. 2B to 2C). Moreover, in some embodiments, the outer diameter dimension R4 is larger than the outer diameter dimension R2, the outer diameter dimension R2 is larger than the inner diameter dimension R3, and the inner diameter dimension R3 is larger than the inner diameter dimension R1.

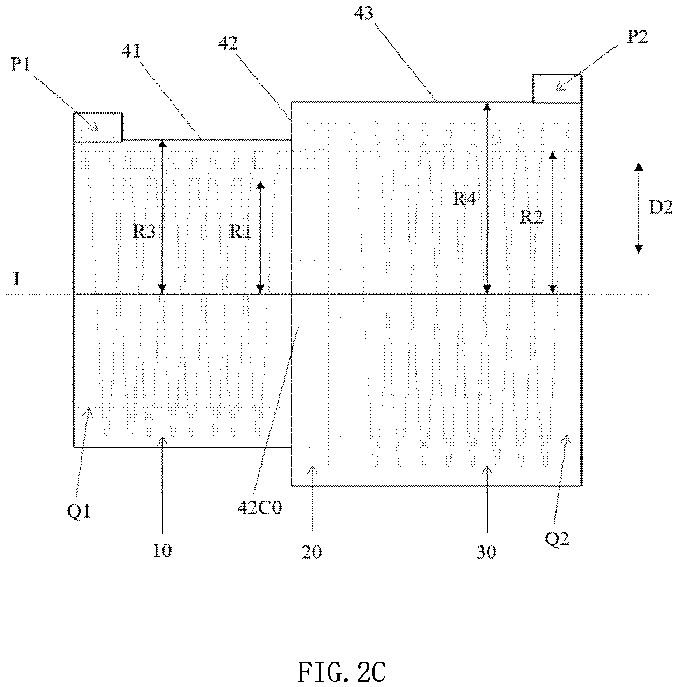

In some embodiments of the disclosure, as shown in FIGS. 2C and 4A to 4B, the second housing portion 42 further extends inwardly along the radial direction D2 to form an end cover 42C where an axle hole 42C0 is further formed. In some embodiments, as shown in FIG. 4A, the end cover 42C may be thermally coupled to a first cooled device correspondingly received in the first cavity Q1 through a first medium 61, and the end cover 42C may be thermally coupled to a second cooled device correspondingly received in the second cavity Q2 through a second medium 62. In the disclosure, materials of the first medium 61 and/or the second medium 62 may include conductive silicone grease.

In the embodiment of FIG. 4A, the first cooled device, for example, is a motor driver 54, and may be received in the first cavity Q1. The motor driver 54 may include at least one heating device, and the at least one heating device may include power switching devices. In some embodiments of the disclosure, the motor driver 54, for example, may be fixed by the power switching devices, inverters, buses and a control panel. The second cooled device, for example, is a motor 100, which may be received in the second cavity Q2. For example, other structures (including the motor shaft 51, the rotor, the stator 52 and the motor winding 53), in addition to the motor driver 54, may be received in the second cavity Q2, and the motor shaft 51 of the motor 100 may be mounted by the axle hole 42C0 and thermally coupled to the end cover 42C, thereby providing a heat dissipation path along the radial and circumferential directions for the motor shaft 51. The stator 52 of the motor 100 may be thermally coupled to the third cooling channel 30, thereby providing the heat dissipation path along the radial and circumferential directions for the stator 52 of the motor 100.

Moreover, in some embodiments, an end portion of the motor driver 54 may be thermally coupled to a first end cover sidewall 42C1 of the end cover 42C adjacent to the first cavity Q1 through the first medium 61, and an end portion of the motor winding 53 may be thermally coupled to a second end cover sidewall 42C2 of the end cover 42C adjacent to the second cavity Q2 through the second medium 62. Such that the end cover 42C can provide a heat dissipation path along the axial direction for the end portion of the motor driver 54 and the end portion of the motor winding 53, achieving bidirectional cooling of the end portion of motor driver 54 and the end portion of motor winding 53 at the same time. In addition, the heat dissipation path along the axial direction can be provided for the end portion of the motor driver 54 and the end portion of the motor winding 53 through the second cooling channel 20 received in the end cover 42C.

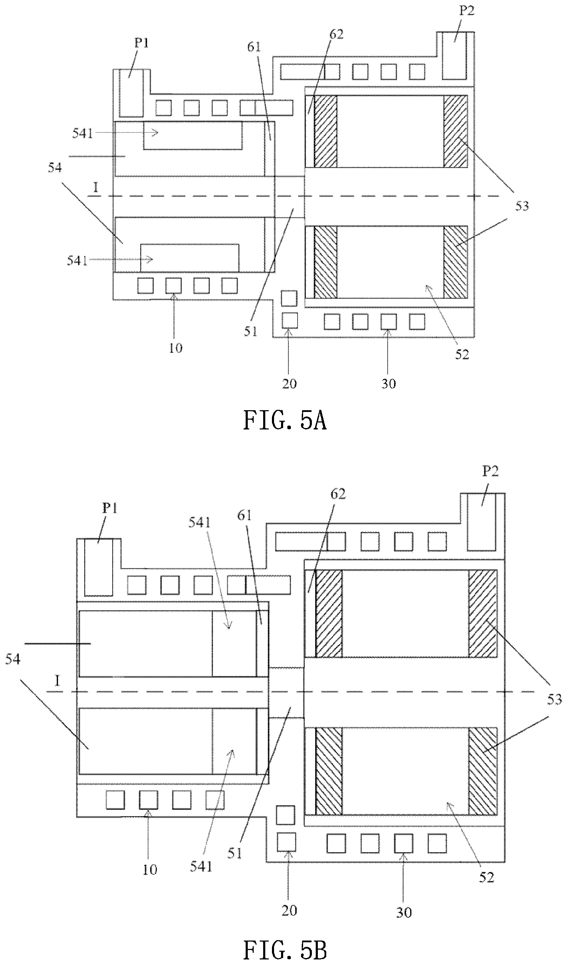

As shown in FIG. 5A, in some embodiments, the disclosure may select to mount heating devices with high heat, such as, power switching devices 541 with large power, in the motor driver 54 on an inner wall of the first cavity Q1 to be thermally coupled to the first cooling channel 10, such that heat emitted from these power switching devices 541 with large power can be dissipated through the first cooling channel 10. Alternatively, as shown in FIG. 5B, in some embodiments, the disclosure may further select to mount the power switching devices 541 on the first end cover sidewall 42C1 of the end cover 42C adjacent to the first cavity Q1 to be thermally coupled to the second cooling channel 20 through the end cover 42C, such that heat emitted from these power switching devices 541 with large power can be dissipated through the end cover 42C and the second cooling channel 20. The disclosure enhances an overall heat dissipation capability by designing the second housing portion 42 with the second cooling channel 20 and forming the end cover 42C, and may also rapidly take heat away since the large power switching devices in the motor driver 54 may be mounted in a wall-attached form. The second housing portion 42 into an interior of the device may also achieve heat dissipation function of the motor shaft 51.

In the disclosure, the motor driver 54 can be fixed in the first cavity Q1 through the glue pouring way, and other structures of the motor 100(e.g., including the motor shaft 51, the rotor, the stator 52 and the motor winding 53), in addition to the motor driver 54, may be fixed in the second cavity Q2 through the glue pouring way. Moreover, the disclosure may further flexibly adjust the radial dimension (such as, a radius) of the first housing portion 41 and the first cooling channel 10 integrated therein by fitting with a size of the motor driver 54, thereby effectively achieving heat dissipation of the motor driver 54 along the radial and circumferential directions. The disclosure may further flexibly adjust the radial dimension (such as, a radius) of the first housing portion 43 and the first cooling channel 30 integrated therein by fitting with a size of the motor 100, thereby effectively achieving heat dissipation of the motor 100 along the radial and circumferential directions.

The disclosure has at least one of the following advantageous effects:
(1) the disclosure can provide heat dissipation capability for the end portion of the motor (e.g., including the connection of the motor driver and the end portion of the motor, and the end portion of the motor winding, etc.) using the second cooling channel of the cooling device.
(2) The motor of the disclosure is an integrated motor driving system using the endwise integrated structure, which includes a whole integrated cooling structure connecting the three cooling channels, and covers four cooling and heat dissipation ways for the motor driver, the motor, the connection of the motor driver and the end portion of the motor, and bearings, so the disclosure can effectively solve the problem of concentration of heat source of the integrated motor driving system.
(3) the cooling device of the disclosure solves the problem of connection and tendency of the channels in the integrated cooling structure of the motor and the motor driver through the second cooling channel spirally arranged in multiple layers along the axial direction.
(4) the cooling device of the disclosure can flexibly adjust a radial dimension (such as, a radius) of the corresponding cooling channel according to a size of the cooled device (such as, the motor driver or the motor) when increasing the cooling capability, thereby maximizing the cooling effect, effectively reducing a weight of the housing, and facilitating increasing a power density of the system.
(5) the disclosure may simplify the cooling structure and pressure loss by arranging a pair of inlet and outlet only (i.e., including a cooling liquid inlet and a cooling liquid outlet).
(6) the integrated cooling structure of the disclosure simplifies the end cover of the motor and a substrate of power switching devices of the motor driver as a cooling channel of the motor driver and the end portion of the motor, which may further cool the motor bearings when providing heat dissipation capability along the axial direction, and ease the problem of concentration of heat source of the integrated motor driving system.

## Claims

1. A cooling device (CD), **characterized in that** the cooling device (CD) comprising:
a first cooling channel (10), a second cooling channel (20) and a third cooling channel (30);
wherein the first cooling channel (10), the second cooling channel (20) and the third cooling channel (30) are arranged along an axial direction (D1) and connected in sequence,
wherein the second cooling channel (20) further extends along a radial direction (D2), and the radial direction (D2) is perpendicular to the axial direction (D1).

2. The cooling device (CD) according to claim 1, wherein,
the first cooling channel (10) is spirally arranged in multiple layers along the axial direction (D1);
the second cooling channel (20) is spirally arranged in multiple layers along the axial direction (D1) and the second cooling channel (20) has multilayered channels (201, 202, 203, 204), wherein multi-stacked channels (202, 203) of the multilayered channels (201, 202, 203, 204) are arranged in stack along the radial direction (D2); and
the third cooling channel (30) is spirally arranged in multiple layers along the axial direction (D1).

3. The cooling device (CD) according to claim 2, wherein,
a first radial dimension of the first cooling channel (10) along the radial direction (D2) is less than a third radial dimension of the third cooling channel (30) along the radial direction (D2).

4. The cooling device (CD) according to claim 2, wherein,
the multi-stacked channels (202, 203) of the second cooling channel (20) are arranged symmetrically or asymmetrically along the radial direction (D2).

5. The cooling device (CD) according to claim 2, wherein,
in the multi-stacked channels (202, 203) of the second cooling channel (20), a cooling liquid flowing in adjacent two channels has opposite flowing directions.

6. The cooling device (CD) according to claim 1, further comprising:
a cooling liquid inlet (P1) in communication with a head end inlet (10P1) of the first cooling channel (10); and
a cooling liquid outlet (P2) in communication with a tail end outlet (30P2) of the third cooling channel (30).

7. The cooling device (CD) according to claim 6, wherein,
the cooling liquid inlet (P1) and the cooling liquid outlet (P2) are disposed on the same side of an axial center line (I).

8. The cooling device (CD) according to any of claims 2 to 7, wherein,
the cooling device (CD) is integrated into a housing (40), and the housing (40) comprises a first housing portion (41) integrating the first cooling channel (10), a second housing portion (42) integrating the second cooling channel (20) and a third housing portion (43) integrating the third cooling channel (30);
the first housing portion (41) forms a first cavity (Q1) correspondingly; and
the third housing portion (43) forms a second cavity (Q2) correspondingly.

9. The cooling device (CD) according to claim 8, wherein,
the second housing portion (42) extends inwardly along the radial direction (D2) to form an end cover (42C), and an axle hole (42C0) is formed on the end cover (42C).

10. The cooling device (CD) according to claim 9, wherein,
the end cover (42C) is thermally coupled to a first cooled device (54) through a first medium (61), and the first cooled device (54) is accommodated in the first cavity (Q1); and/or
the end cover (42C) is thermally coupled to a second cooled device (100) through a second medium (62), and the second cooled device (100) is accommodated in the second cavity (Q2).

11. The cooling device (CD) according to claim 10, wherein,
the first cooled device (54) is a motor driver;
the second cooled device (100) is a motor having a motor shaft (51) mounted through the axle hole (42C0) and thermally coupled to the end cover (42C).

12. The cooling device (CD) according to claim 11, wherein,
the motor driver (54) comprises one or more heating devices, and at least one of the heating devices is mounted on an inner wall of the first cavity (Q1) and thermally coupled to the first cooling channel (10), and/or at least one of the heating devices is mounted on a first end cover sidewall (42C1) of the end cover (42C) adj acent to the first cavity (Q1) and thermally coupled to the second cooling channel (20) ; and/or
an end portion of a motor winding (53) of the motor (100) is mounted on a second end cover sidewall (42C2) of the end cover (42C) adjacent to the second cavity (Q2) and thermally coupled to the second cooling channel (20).

13. The cooling device (CD) according to claim 11, wherein,
a stator (52) of the motor (100) is thermally coupled to the third cooling channel (30).

14. The cooling device (CD) according to claim 8, wherein,
the first cavity (Q1) is cylindrical; and/or
the second cavity (Q2) is cylindrical.

15. A motor (100), **characterized in that** the motor (100) comprising a housing (40), a motor shaft (51), a rotor, a stator (52), a motor winding (53), a motor driver (54), and the cooling device (CD) according to any of claims 1 to 14.
